(19) Europäisches Patentamt
European Patent Office
Office européen des brevets

(11) **EP 0 789 476 B1**

(12) **EUROPEAN PATENT SPECIFICATION**

(45) Date of publication and mention
of the grant of the patent:
**17.11.2004 Bulletin 2004/47**

(51) Int Cl.$^7$: **H04M 9/08**

(21) Application number: **97101863.5**

(22) Date of filing: **06.02.1997**

(54) **Noise reduction arrangement**

Geräuschverminderungsanordnung

Dispositif de réduction de bruit

(84) Designated Contracting States:
**AT BE CH DE DK ES FI FR GB GR IE IT LI LU MC NL PT SE**

(30) Priority: **09.02.1996 US 11436 P**

(43) Date of publication of application:
**13.08.1997 Bulletin 1997/33**

(73) Proprietor: **TEXAS INSTRUMENTS INCORPORATED**
**Dallas, Texas 75243 (US)**

(72) Inventor: **Oh, Stephen S.**
**Richardson, Texas 75082 (US)**

(74) Representative: **Holt, Michael**
**Texas Instruments Limited,**
**P.O. Box 5069**
**Northampton NN4 7ZE (GB)**

(56) References cited:
**US-A- 5 272 695**

- **GUSTAFSSON S ET AL: "Combined acoustic echo control and noise reduction for hands-free telephony" SIGNAL PROCESSING. EUROPEAN JOURNAL DEVOTED TO THE METHODS AND APPLICATIONS OF SIGNAL PROCESSING,NL,ELSEVIER SCIENCE PUBLISHERS B.V. AMSTERDAM, vol. 64, no. 1, page 21-32 XP004108821 ISSN: 0165-1684**
- **SCALART P ET AL: "A system for speech enhancement in the context of hands-free radiotelephony with combined noise reduction and acoustic echo cancellation" SPEECH COMMUNICATION,NL,ELSEVIER SCIENCE PUBLISHERS, AMSTERDAM, vol. 20, no. 3, page 203-214 XP004016545 ISSN: 0167-6393**
- **YASUKAWA H: "ACOUSTIC ECHO CANCELLER WITH SUB-BAND NOISE CANCELLING" ELECTRONICS LETTERS,GB,IEE STEVENAGE, vol. 28, no. 15, page 1403-1404 XP000307688 ISSN: 0013-5194**

**Description**

BACKGROUND OF THE INVENTION

In a full-duplex hands-free telephone or speaker-phone, sounds uttered by a first person calling into the speaker-phone and emanating from a speaker are picked up by the speaker-phone's microphone which is intended to pick up sounds uttered by a second person using the speaker-phone. Careful design of the hands-free telephone can prevent positive feed back which results in howling. A second form of feedback can be present in which the first speaker's words are transmitted back to him or her delayed in time at a reduced magnitude and often with distortion. This echo of one's own words is very distracting to most users and is normally controlled by an acoustic echo canceller circuit. If the hands-free telephone is a cellular telephone in an automobile, adaptive noise suppression is required because the signal-to-noise ratio is low and the characteristic of the noise varies with time.

Conventional hands-free digital cellular telephones address the acoustic echo cancellation and noise suppression problems as separate problems. Therefore, applying these solutions together may result in an inefficient system. For example, a fullband LMS algorithm disclosed in Sondhi, M.M. and Kellerman, W., *Adaptive Echo Cancellation for Speech Signals,* Chapter 11 from *Advance in Speech Signal Processing,* Ed: By S. Furui and M.M. Sondhi, Marcel Dekker, 1991, can be used to provide an effective and straight forward solution to echo cancellation. Recently, researchers have been using a subband acoustic echo canceller because this requires less computational complexity and provides faster convergence to the filter coefficients that produce optimum echo cancellation. The noise suppression algorithm is commonly based upon the spectral subtraction method. In the spectral subtraction method, for the noise only period, the noise spectrum is estimated using Fast Fourier Transform (FFT) or band pass filter banks. When the speech signal with noise comes in, the noise spectrum estimate is subtracted from the noise signal spectrum. The spectral subtraction method performs well for enhancing the signal-to-noise ratio but may create an artefact called "musical noise".

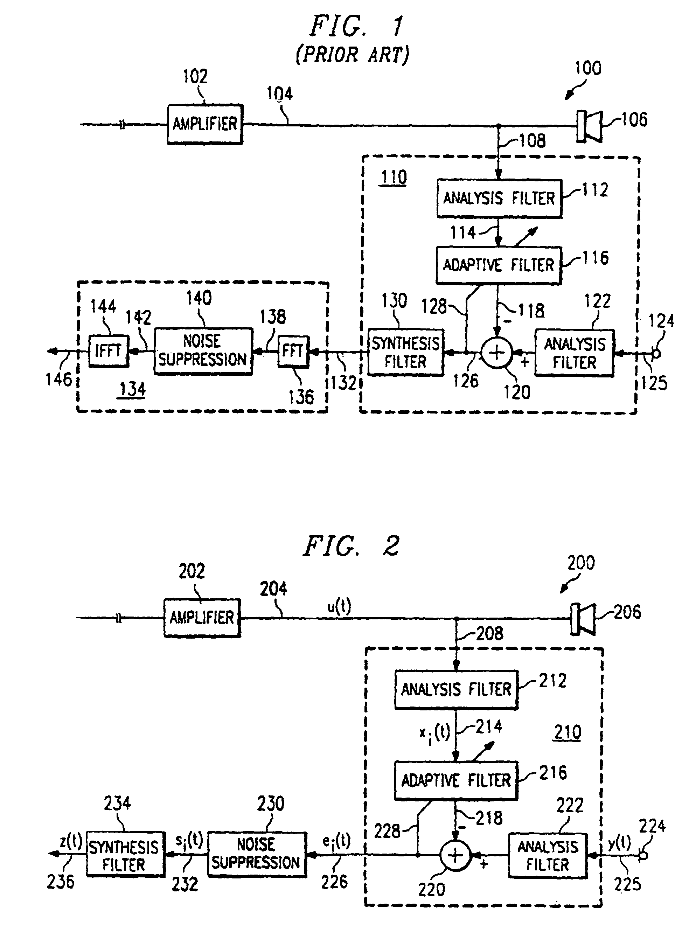

Fig. 1 shows a prior art system in which the two algorithms, one for the acoustic echo cancellation and one for noise suppression are applied independent of each other. In the system of Fig. 1, acoustic echo cancellation is provided by block 110 and noise suppression is provided by block 134. The output signal on line 104 used to drive speaker 106 is provided by amplifier 102 from well known circuitry inside the hands-free telephone (not shown). The output signal on line 104 is also provided by line 108 to an analysis filter 112 which generates a subband signal on line 114 at the output of the analysis filter. The subband signal on line 114 is provided to adaptive filter 116. The output of adaptive filter 116 on line 118 is provided to summing amplifier 120 which also receives an input from analysis filter 122. Analysis filter 122 provides a subband signal from the input of microphone 124 which is the acoustic sounds emanating from the user also known as "near-end speech". The output of summation amplifier 120 on line 126 is provided to synthesis filter 130 which generates a fullband signal on line 132 and also via line 128 to the adaptive filter 116 to adjust the coefficients used by the filter. The coefficients of the adaptive filter 116 are adjusted to provide acoustic echo cancellation, as is well known in the art. Block 110 shows a subband acoustic echo cancellation system. If the system were implemented in the fullband domain, analysis filters 112 and 122 and synthesis filter 130 would be omitted.

The fullband reduced echo signal on line 132 is input to noise suppression circuit 134 at FFT generator 136. The output of FFT generator on line 138 is input to noise suppression circuit 140 which performs the spectral subtraction. The output of the spectral subtraction circuit on line 142 is fed into Inverse Fast Fourier Transform (IFFT) circuit 142 which produces the full band signal on line 146 as an output of the acoustic echo cancellation and noise suppression circuit 100.

The system of Fig. 1 has redundancies since the signal from the microphone is transformed to the subband domain for echo cancellation and to the frequency domain for noise suppression. The system can be implemented, for example, by a Texas Instruments TMS 320C50 DSP (Digital Signal Processor) and, if a full band acoustic echo suppression system is implemented, can require twenty to thirty MIPS of processing power. Accordingly, there is a need for a more efficient approach which can perform these functions using less processing power, and therefore at lower cost.

A sub-band echo-canceller with cascaded noise cancelling is described by A Yasukawa in "Acoustic echo canceller with sub-band noise cancelling", in Electronic Letters, vol. 28, no. 15 pages 1403-1404.

SUMMARY OF THE INVENTION

It is a general object of my invention to provide a method, circuit and apparatus for suppressing noise.

Another object of the invention is to provide a method, circuit and apparatus for subband domain noise suppression in an acoustic echo cancellation and noise suppression system.

A further object of the invention is to provide a method, circuit and apparatus for an acoustic echo cancellation and noise suppression in a hands-fee telephone.

Yet another object of the invention is to provide a method and apparatus for subband domain noise suppression in an acoustic echo cancellation and noise suppression system for a hands-free cellular telephone for an automobile. These and other objects, advantages and features are achieved by a conditioning arrangement according to claim 1.

Another aspect of the invention includes a method of operating a hands-free telephone which has a loudspeaker coupled to an output signal source for generating a corresponding acoustic signal and a microphone for generating an input signal. The presence of the output signal in the input signal is reduced by subband domain acoustic echo cancellation for generating a subband reduced-echo signal. Noise in the subband reduced echo signal is suppressed by subband domain noise suppression for generating a subband reduced-noise reduced echo signal. Yet another aspect of the invention includes apparatus for reducing noise in an audio frequency signal. An analysis filter is coupled to receive the audio frequency signal for generating a subband signal. A subband signal noise suppression circuit is coupled to receive the subband signal and comprises a circuit for estimating a current power $\rho_i(t)$; a circuit for updating a noise spectrum estimate $NS_i$; a circuit for computing noise suppression gain $G_i$; a circuit for adjusting for a minimum gain; and a circuit for scaling the reduced-echo signal with the computed gain.

A still further aspect of the invention is achieved by a method of reducing noise in an audio frequency signal. A subband signal is generated from the audio frequency signal. Noise in the subband signal is reduced by estimating current power $\rho_i(t)$, updating a noise spectrum estimate $NS_i$, computing noise suppression gain $G_i$, adjusting for a minimum gain, and scaling the reduced-echo signal with the computed gain.

In an even further aspect of the invention there is provided an apparatus further comprising a near-end speech detector comprising an echo energy detector for determining an echo path energy ratio (EPR) as an energy ratio between the output signal and the input signal; a canceller output detector for determining an echo canceller energy ratio (ECER) as an energy ratio between an output of the echo cancellation circuit and the output signal; a comparator circuit for simultaneously comparing (i) EPR to a first predetermined threshold level and (ii) ECER to a second predetermined threshold level; and a detector circuit responsive to the comparator circuit for indicating that near-end speech is present when EPR and ECER simultaneously respectively exceed the first and second predetermined threshold levels.

BRIEF DESCRIPTION OF THE DRAWINGS

Fig. 1 is a block diagram of a conventional acoustic echo cancellation and noise suppression system.
Fig. 2 is a block diagram of an acoustic echo cancellation and noise suppression system in accordance with one embodiment of my invention.
Fig. 3 is a flow diagram of the event sequences implemented by the noise suppression circuit of Fig. 2.
Figs. 4 is a more detailed flow diagram of the event sequences in Fig. 3.
Fig. 5 is a block diagram of an acoustic echo cancellation and noise suppression system which includes subband domain near-end speech detection.
Fig. 6 is flow diagram of the event sequences implemented by the subband domain near-end speech detection of the embodiment of Fig. 5.
Fig. 7 is a block diagram of an acoustic echo cancellation and noise suppression system having both subband domain near-end speech detection and residue echo suppression.
Fig. 8 is flow diagram of the event sequences of the residue echo suppression of the embodiment of Fig. 7.
Fig. 9 is flow diagram of the event sequences of the spectrum reshaping of Fig. 8.
Fig. 10 shows the input and output signals of acoustic echo cancellation and noise suppression system in which residual echo suppression is not used.
Fig. 11a is a spectrogram of the input signal to the acoustic echo and noise suppression system, y(t).
Fig. 11b is a spectrogram of the output of the echo cancellation e(t).
Fig. 11c is a spectrogram of the output of the noise suppression $s_i(t)$.
Fig. 11d is a spectrogram of the output $r_i(t)$ of the residual echo suppression using spectrum reshaping.

DETAILED DESCRIPTION

In my invention, frequency domain processing is viewed as a special case of subband domain processing to produce a more efficient system in which both acoustic echo cancellation and noise suppression operations are performed in the same domain without going through a synthesis filter and Fast Fourier Transformation. Reducing the operations of synthesis filtering and Fast Fourier Transformation provides savings in processing power and computational complexity. Thus, the system proposed herein can require as little as seven MIPS of processing power, thus reducing the processing power required by two thirds to three quarters. The acoustic echo canceller and subband domain noise suppression system is shown generally as 200 in Fig. 2. Like elements have similar reference numerals to those in Fig. 1. Thus, the amplifier, speaker and microphone can be identical to those of Fig. 1. The acoustic echo canceller block 210 is essentially the same as the acoustic block 110 of Fig. 1, except that after echo cancellation by subbands the synthesis filter 130 for converting the subband signal to a fullband signal is omitted. Instead a synthesis filter 234 is applied to the output 232 of a noise suppression circuit 230 to provide fullband signal z(t) on line 236.

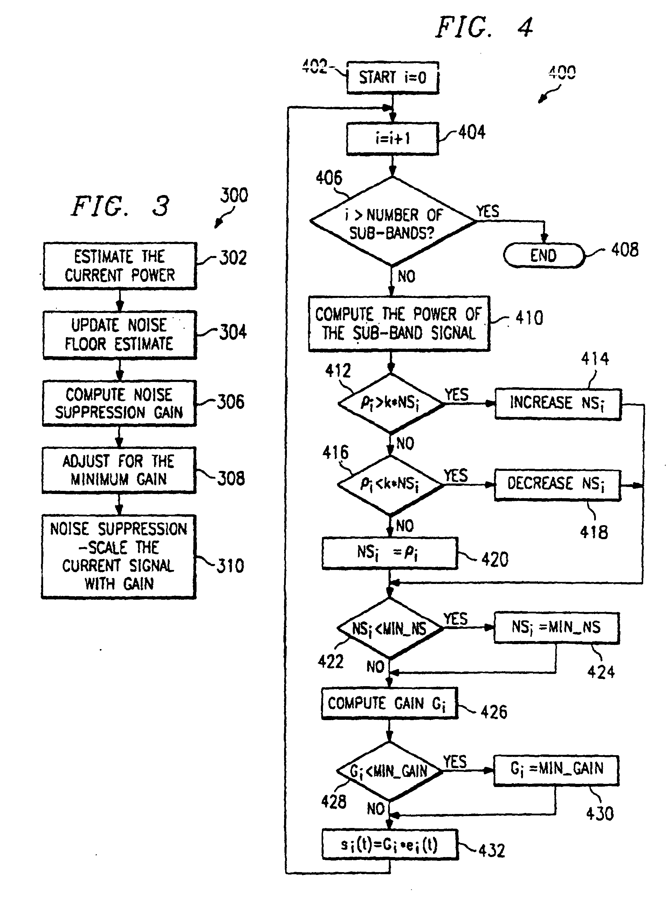

Noise suppression circuit 230 receives the output of the acoustic echo canceller as $e_i$(t) for an i-th subband on line 226 and performs a subband noise suppression process 300 shown in Fig. 3. In a preferred embodiment, eight subbands are used and a smoothing operation is performed in the time domain using an IIR (Infinite Impulse Response) filter, a first order loop filter, on a power spectrum estimate for each subband to provide the time-domain smoothing without introducing system latency. The power spectrum at the i-th subband is estimated in block 302 using the equation:

$$\rho_i(t) = (1 - \mu) \cdot \rho_i(t-1) + \mu \, |Xi(t)|^2 \qquad \text{(Equation 1)}$$

where $\rho_i$(t) is the estimate of the power spectrum at the $i^{th}$ subband, $|Xi(t)|^2$ is the current instantaneous power at the $i^{th}$ subband, and $\mu \ll 1$.

This provides an exponentially decreasing contribution for each of the previous time samples. For example:

$$\rho_i(10) = (1 - \mu) \, \rho_i(9) + \mu \, |Xi(10)|^2$$

$$= (1 - \mu)[(1 - \mu) \, \rho_i(8) + \mu \, |Xi(9)|^2] + \mu \, |Xi(10)|^2$$

$$= (1 - \mu)^2 \, \rho_i(8) + \mu(1 - \mu) \, |Xi(9)|^2 + \mu \, |Xi(10)|^2$$

$$= (1 - \mu)^{10} \, \rho_i(0) + \mu \, (1 - \mu)^9 \, |Xi(1)|^2 + \mu(1 - \mu)^8 \, |Xi(2)|^2 .... + \mu \, (1 - \mu) \, |Xi(9)|^2 + \mu$$

$$|Xi(10)|^2$$

For $\mu = 0.1 \; \rho_i(0) = 0$

$$\rho_i(10) = 0.1 \, |Xi(10)|^2 + 0.09 \, |Xi(9)|^2 + 0.08 \, |Xi(8)|^2 ..... + 0$$

Then at block 304 the noise spectrum estimate $NS_i$ is updated. In block 306 this information is used to compute a noise suppression gain using:

$$G_i = (1 - \frac{NS_i}{k\rho_i})^{\frac{1}{2}} \qquad \text{(Equation 2)}$$

where k is a predetermined value to reduce the fluctuation of gain due to the power spectrum estimate and $NS_i$ is the noise spectrum estimate for the $i^{th}$ subband. The gain is then compared with a predetermined minimum gain and if it is less than the minimum gain, set equal to the minimum gain in block 308. It has been determined that if a noisy signal is suppressed too much this results in an audible artifact in the signal. Therefore, a minimum value is assigned to the gain which in effect clamps the noise suppression in each subband to avoid this audible artifact. Then in block 310 each echo-cancelled subband signal $e_i$(t) is multiplied by its corresponding computed noise suppression gain $G_i$ to produce a scaled subband signal $s_i$(t).

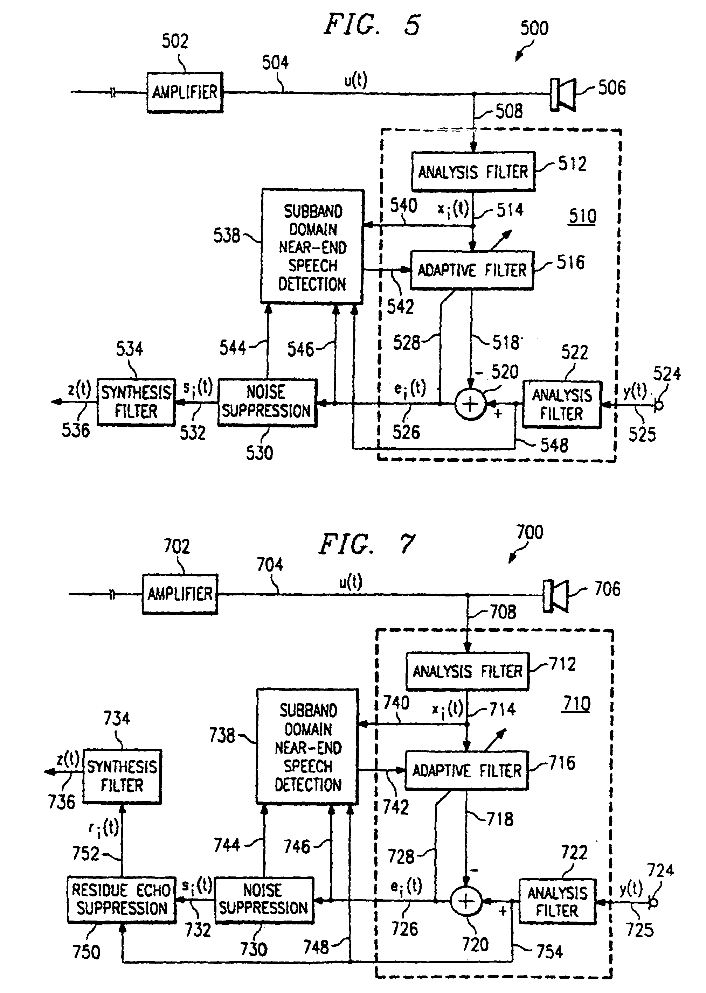

Fig. 4 shows a more detailed flow chart of the process of Fig. 3. Starting block 402 initializes the subband i to 0 and then proceeds to block 404 where the subband is incremented by 1. Control then passes to block 406 where the number of subbands is compared with the number of subbands to be used for the noise suppression operation, in this embodiment 8 subbands. Increasing the number of subbands reduces the computing power required, if the number of subbands is within reason. For example, 32 subbands can be used. But increasing the number of subbands has the disadvantage of requiring more memory. Eight subbands have been chosen here as a reasonable compromise. If the number of subbands has been exceeded the process terminates at block 408. Otherwise, control passes to block 410 in which an updated power spectrum estimate $\rho_i$ of the current subband signal is computed using equation 1. Control then passes to block 412 in which the power $\rho_i$ is compared against the predetermined constant k times the

noise spectrum estimate $NS_i$ for the i-th subband. If $\rho_i$ exceeds this amount, the noise spectrum estimate $NS_i$ is increased. Otherwise, control passes to block 416 in which $\rho_i$ is compared to see if it is less than k times $NS_i$ ; if so, $NS_i$ is decreased. If it is not, control passes to block 420 in which $NS_i$ is set equal to $\rho i$. Control from blocks 414, 418 and 420 proceeds to block 422 in which $NS_i$ is compared to see if it is less than the minimum noise spectrum estimate. If it is, then $NS_i$ is set equal to the minimum of the noise spectrum estimate in block 424. The output of block 424 or the NO output of block 422 pass control to block 426 in which the noise suppression gain $G_i$ is computed using equation 2. Control passes to block 428 in which gain $G_i$ is compared to see if it is less than the minimum gain. If it is, it is set equal to the minimum gain in block 430. The output of block 430 or the NO output of block 428 passes to control to block 432 in which the subband output $s_i(t)$ is set equal to the computed gain $G_i$ times the echo-cancelled subband signal $e_i(t)$. Control then returns to block 404 which increments the subband index i and the process repeated until all subbands have been gain-adjusted, after which the noise-suppression process terminates at block 408. This is followed by synthesis filter 234 which transforms the subband signals $s_i(t)$ into a fullband signal $z(t)$ on line 236.

Fig. 5 shows a further embodiment of my invention generally shown as 500 in which near-end speech is detected in the subband domain. Near-end speech is speech from the local location of the hands-free telephone, that is, speech from the user of the telephone $y(t)$ as compared with speech from the person from the other end of the telephone line or telephone link $u(t)$. Once near-end speech is detected, the filter coefficients for the adaptive filter 516 are "frozen" to prevent the adaptive filter from becoming unstable. A fundamental assumption in acoustic echo cancellation techniques is the absence of near-end speech. Accordingly, when near-end speech is detected, updating of the adaptive filter coefficients is inhibited by logic circuits, for example, to prevent instability. The circuit in Fig. 5 is identical to that of Fig. 2 with the exception of the addition of block 538 which is the subband domain near-end speech detection circuit. Circuit 538 receives the subband signal $x_i(t)$ that is output from analysis filter 512 as well as the subband signal $e_i(t)$ which is the output of acoustic echo canceller block 510. Also received as input is an of output noise suppression circuit 530 on line 544 and the subband output of analysis filter 522 on line 548. A control line 542 sends a control signal to the adaptive filter 516 to "freeze" the coefficents thereof once near-end speech is detected.

Circuit 538 implements the algorithm 600 of Fig. 6. An adaptive algorithm is used because the targeted environment is adverse (inside an automobile) and time varying. The algorithm uses two measures for detecting near-end speech, the echo path energy ratio and the echo canceller energy ratio. The term echo path energy ratio is defined as the energy ratio between the near-end speech signal, $y(t)$, and the far-end speech signal, $u(t)$, of Fig. 5. It has been determined that the noise components inside a car for highway driving are concentrated below 500 Hz, while speech signals are spread over entire frequency region. Thus, the echo path energy ratio can be used for detecting the near-end speech regardless of the noise condition if the ratio is computed based on frequency components beyond 500 Hz. This can be easily accomplished in the subband domain by selecting higher frequency bins. The echo canceller energy ratio is defined as the energy ratio between the acoustic echo cancellation-noise suppression output $s_i(t)$ and the far-end speech signal $u(t)$. The near-end speech detection algorithm tracks the echo path energy ratio by taking a long-term average and detects when the energy fluctuation is too large. The rationale behind this is that the energy of a human speech signal fluctuates much more quickly compared to any noise changes. For the echo canceller energy ratio, a fixed threshold value is used to detect the near-end speech signal. When both the acoustic echo canceller and noise suppression circuits work properly, the energy of $s(t)$ should be less than the energy of $u(t)$. Otherwise, either echo is not cancelled or noise is not suppressed enough. The fixed threshold value is determined empirically.

Algorithm 600 starts with block 602 in which the long-term average energy for the far-end signal $u(t)$ is computed. Control then passes to block 604 in which the long-term average energy of the near-end signal $y(t)$ is computed. Control passes to block 606 in which the echo path energy ratio (EPR) is determined as the ratio between the near-end speech signal to the far-end speech signal. Control then passes to block 608 in which the EPR is compared to see if it is greater than $\beta$ LT_EPR. $\beta$ is an empirically derived constant and LT_EPR is the long-term average for EPR which is computed in block 612. For the first pass, LT_EPR is set equal to EPR from block 606. If EPR is greater than $\beta$LT_EPR, then the near-end speech one signal is given a Boolean value of yes. If not, control passes to block 612 in which LT_EPR is updated. Control then passes the block 614 which the near-end speech one is assigned a Boolean value of no. Control from block 610 and 614 pass through the input decision block 626. Control from block 602 also passes to block 616. In block 616 the echo cancel output energy is computed. Control passes to block 618 in which the echo canceller energy ratio (ECER) is determined as the ratio between the output of the acoustic energy cancellation and noise suppression circuit $s(t)$ to the long-term average for the far-end signal $u(t)$ computed in block 602. Control then passes to block 620 in which ECER is compared to see if it is greater than $\alpha$ where $\alpha$ is an empirically determined threshold. If ECER exceeds $\alpha$, control then passes to block 622 in which the near-end speech 2 signal is given the Boolean value of yes. If not, control passes to block 624 in which the near-end speech 2 signal is given the Boolean value of no. Control then passes to block 626 which it is determined whether or not the near-end speech 1 and the near-end speech 2 signals both have the Boolean value of yes. If so, near-end speech is detected and the program in block 628 and the program terminates in block 632. If not, then speech is not detected in block 630 and the program terminates in block 632.

Fig. 7 shows an acoustic echo cancellation and noise suppression circuit 700 which additionally has residual echo suppression embodied in block 750. Circuit 700 is essentially identical to circuit 500 of Fig. 5 except for the addition of residue echo suppression circuit 750. Like elements have similar reference numerals to those in Fig. 5. In Fig. 7, the subband domain near-end speech detection circuit block 738 is shown, but is not necessary to practice the residue echo suppression. Residue suppression block is connected to receive the signal $s_i(t)$ on line 732 from the output of noise suppression circuit 730. It is also connected to line 748 by line 754 to receive the output of the analysis filter 722 which is the subband domain signal from the microphone 724. The output of the residue echo suppression circuit 750 is fed via line 752 to the synthesis filter 734 to produce a fullband output $z(t)$ on line 736.

The purpose of the residual echo suppression circuit 750 is to reduce the echo signal, if any, remaining after processing by the acoustic echo canceller circuit 210. For example, if the acoustic echo canceller circuit 210 reduces the echo by 25dB, it may still be heard. When the environment is noisy, however, complete removal of the residual echo signal is not desirable since it produces clicking effects caused by switching too often between suppression and non-suppression modes. This is caused by the alternator circuit suppressing the noise components over the period when the residual echo signal should be suppressed, which creates abrupt changes in background noise. Therefore, the so-called "comfort noise" is generated to reduce the clicking effects. To avoid suppressing near-end speech, the residual echo suppression is inactive during the presence of near-end speech. The near-end speech detector should be allowed to false alarm by claiming the presence of near-end speech when it is absent to reduce the potential for near-end speech suppression. The residual echo suppression algorithm uses the echo canceller energy ratio (ECER) which was described above, to detect when to suppress the signal. A fixed threshold value is used for detection, similar to that used for the near-end speech detection discussed above. For example, when there is 10 dB cancellation, the ECER value should be less than about 0.3. Therefore, if ECER is less than 0.3, the residual signal is suppressed. It should be noted that the threshold value used here is different from that used in the near-end speech detection circuit.

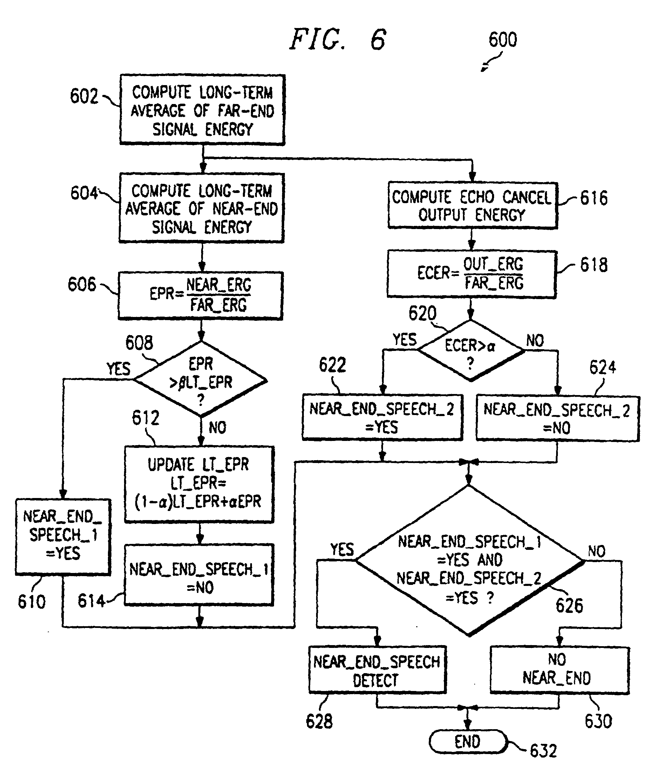

Residual echo suppression circuit 750 implements the algorithm 800 of Fig. 8. The algorithm starts in block 802 in which the estimate of the current power is made. Control then passes to block 804 in which the echo canceller energy ratio (ECER) as of block 302 is computed. Control passes to block 806 in which it is determined whether or not ECER is less than an empirically determined constant y. If it is, then the echo is determined to have been suppressed enough and no further action is taken. If it is not, control passes to block 808 in which a spectrum reshaping technique is applied. The spectrum reshaping technique uses the noise spectrum $NS_i$ described above. The purpose of the spectrum reshaping technique is to produce a comfort noise that closely matches the background noise characteristics. The spectrum reshaping technique reshapes the spectrum of the current signal, which contains the audible residual echo signal, based on the noise spectrum estimate. By reshaping the spectrum, the signal sounds similar to the background noise (background noise replaces the residual echo) which results in the clicking effects being almost removed.

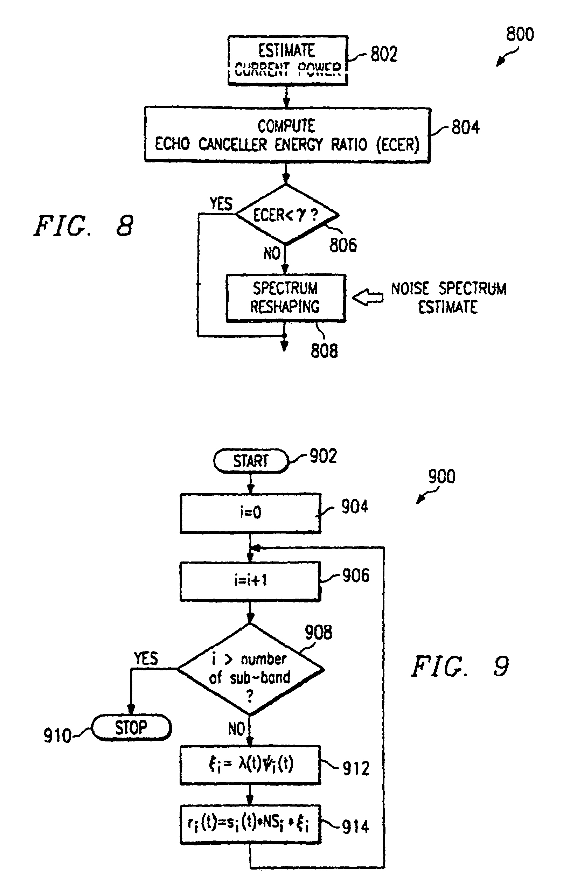

The spectrum reshaping technique of block 808 is implemented by the algorithm 900 of Fig. 9. Algorithm 900 starts at block 902 and transfers control to block 904 in which i is set equal to 0 where i represents the number of the frequency bin being processed. The value of i having been initialized, control passes to block 906 in which the value of i is incremented by 1 and control then passes to block 908 in which the decision is made as to whether i is greater than the number of the subband being used in processing; in the present embodiment 8 subbands are used. If i exceeds the number of subbands being processed, control then passes to block 910 where the algorithm stops. If i does not exceed the number of subbands being processed, control passes to block 912 in which the energy $\xi_i$ can be computed using the equation:

$$\xi_i = \lambda |s_i(t)|^2 \qquad \text{(Equation 3)}$$

where $\lambda$ is a constant. However, in a preferred embodiment of the invention, equation 3 is replaced with:

$$\xi_i = \lambda(t)\Psi_i(t) \qquad \text{(Equation 4)}$$

where $\lambda(t)$ is a time-varying constant. Equation 3 represents the scaling value $\xi_i$ based on the instantaneous power of $s_i(t)$ whereas equation 4 represents the scaling value $\xi_l$ based on the average power of $s_i(t)$ which gives a smoother response. In equation 4, $\Psi_i(t)$ is a long-term power estimate for the i-th bin, which can be computed as:

$$\Psi_i(t) = (1-\mu)\, \Psi_i(t-1) + \mu |s_i(t)|^2 \qquad \text{(Equation 5)}$$

Whereas before $\mu \ll 1$.

The time varying constant $\lambda(t)$ can be estimated for each frame as:

$$\lambda(t) = \frac{1}{N} \frac{1}{M} \sum_{k=1}^{N} \sum_{j=1}^{M} |s_j(t-k)|^2 \qquad \text{(Equation 6)}$$

where M is the number of bins and N is the total number of data points in a frame. It is also possible to estimate $\lambda(t)$ in a manner similar to equation 5 or to use a time-invariant constant $\lambda$ which can be determined empirically.

Control then passes to block 914 in which the output signal $r_i(t)$ is computed by multiplying the signal on line 732 $s_i(t)$ by the noise spectrum estimate and the computed value of $\xi_i$ using equation 7:

$$r_i(t) = s_i(t) \cdot NS_i \cdot \xi_i \qquad \text{(Equation 7)}$$

Control then passes back to block 906 and the process is repeated until the value of M exceeds the number of subbands being processed at which point the algorithm terminates at block 910.

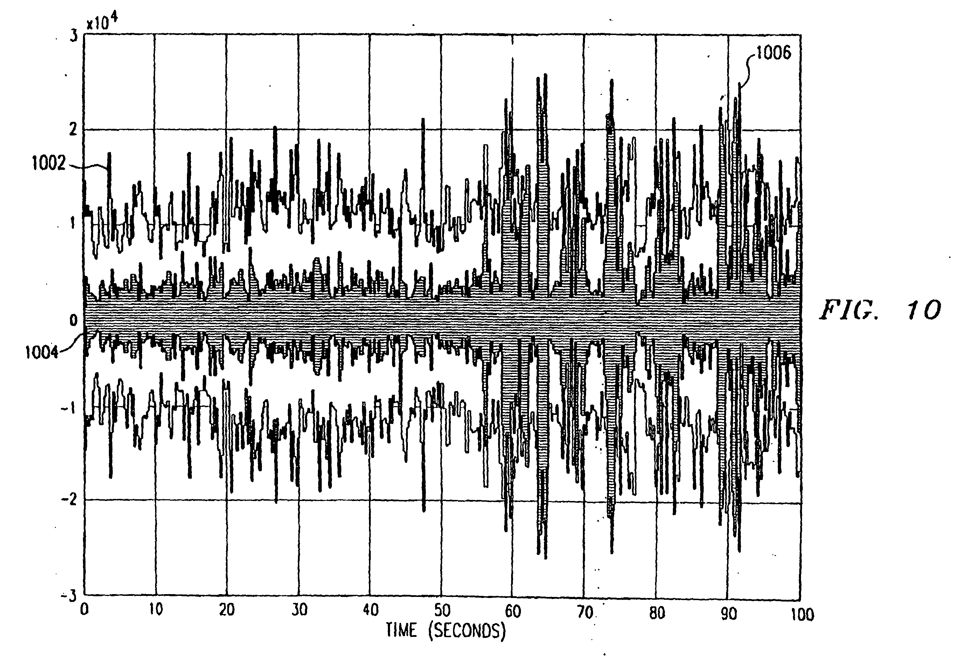

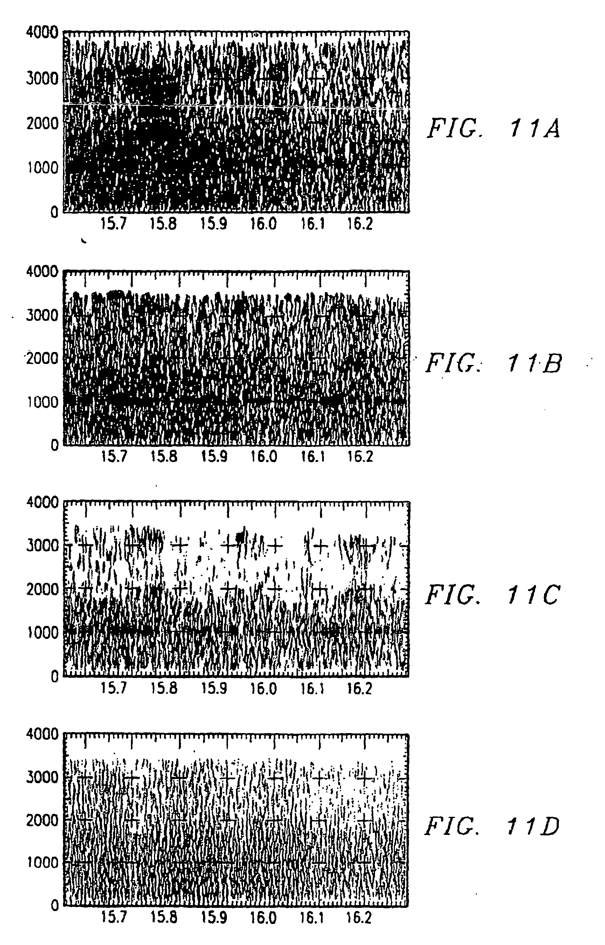

Figs. 10 and 11 illustrate the performance of the system. Fig. 10 shows the input from microphone 224 as signal 1002. For the first period of about 55 seconds, the signal contains the echo signal with highway noise while the remaining period indicates the presence of near-end speech. Signal 1004 shows the dramatic reduction in input noise. Signal 1006 represents the near-end speech. Residual echo suppression was not used in this test.

Fig. 11 depicts the spectrograms of four signals: the input signal of the acoustic echo cancellation and noise suppression system $y(t)$ is of Fig. 11a. The output $e(t)$ of the echo cancellation circuit only is of Fig. 11 b. The signal $s_i(t)$ at the output of the noise suppression circuit is of Fig. 11 c and the output of the residual echo suppression using spectrum reshaping $r_i(t)$ is of Fig. 11d. Note that the output of the residual echo suppression lacks an indication of the speech characteristics.

It is estimated that using a TMS 320C50 with the program implemented in assembly language that the acoustic echo cancellation program will require 6 MIPS of processing power, the noise suppression 1 MIP of processing power, and the residual echo suppression 1 MIP of processing power. Therefore, a system comprising the acoustic echo cancellation and noise suppression could be performed in 7 MIPS of processing power. When compared with the 20 or 30 MIPS of processing power required for present systems, this represents a two thirds to three quarters reduction in processing power and therefore allows the system to be built at lower cost.

While a particular embodiment of my invention has been disclosed herein, certain changes and modifications will readily occur to those skilled in the art. For example, although the residual suppression circuit was described in a subband domain system, it is not so limited. Any transformation to represent the frequency domain such as FFT, DFT, or Wavelet Transform can also be used. The circuitry necessary to perform such transformations and inverse transformations back to the frequency domain are well known in the art. All such changes and modifications can be made without departing from the invention as defined by the appended claims.

**Claims**

**1.** A conditioning arrangement (200) including:

microphone-in and speaker line input terminals for respectively receiving microphone (225) and speaker signals (208);
an echo canceller circuit (210), coupled between the microphone-in and speaker-line input terminals, for producing a subband reduced-echo michrophone signal (226) by i) transforming the microphone signal (225) into a subband microphone signal and the speaker signal (208) into a filtered subband speaker signal (214), and ii) subband subtracting (220) the filtered subband speaker signal from the subband microphone signal; and **characterised in that** it further includes:

a noise-suppresser circuit (230) coupled to the echo canceller circuit (210), for producing a subband reduced-noise, reduced-echo michrophone signal (232) by subband noise suppression of the subband reduced-echo microphone signal (226).

**2.** The arrangement of claim 1 further including a synthesis filter (234) responsive to the subband reduced-noise reduced-echo signal (232) for generating a fullband reduced-noise reduced-echo signal (236).

3. The arrangement of claim 1 or claim 2 wherein the echo canceller circuit (210) comprises an adaptive filter (516) having changeable filter coefficients responsive to feedback of the subband reduced-echo microphone signal, for transforming the speaker signal into a filtered subband speaker signal.

4. The arrangement of claim 1 or claim 2 wherein the echo canceller circuit includes an adaptive filter (716) coupled to receive corresponding subband signals from the output signal source and the microphone's input signal for generating a signal proportional to the component to the first acoustic signal from the loudspeaker detected by the microphone.

5. The arrangement of any preceding claim further including a detector circuit (538) responsive to the subband microphone signal, subband reduced-echo microphone signal, and reduced-noise, reduced-echo microphone signal for generating a FREEZE control signal(542) only when the microphone signal contains near-end speech, i.e. speech actually voiced near the microphone;
    The adaptive filter being responsive to the FREEZE control signal for disabling the filter coefficients from changing.

6. The arrangement of claim 5 wherein the detector circuit comprises:

    a circuit (538) for determinig an echo path energy ration, EPR, as an energy ratio between the microphone signal (525) and the speaker signal (508) and an echo canceller energy ratio, ECER, as an energy ratio between an output of the echo cancellation circuit and the speaker signal (508);
    a circuit comparing EPR to a first predetermined threshold level and ECER to a second predetermined threshold level; and
    a sensing circuit for determining that near-end speech is present when EPR exceeds the first predetermined threshold level and at the same time ECER exceeds the second predetermined threshold level.

7. The arrangement of claims 2 to 6 and further including a subband residue echo cancellation circuit (750) coupling the synthesis filter to the noise-supressor circuit, which is adapted to use the subband microphone signal to reduce any residual echo in the reduced-noise, reduced-echo microphone signal.

8. The arrangement of any preceding claim wherein in each subband i the noise-supressor circuit is adapted to estimate a current power $r_i(t)$, is adapted to update a noise spectrum estimate $NS_i$, is adapted to compute a noise suppression gain $G_i$, is adapted to determine an adjusted gain by adjusting for a minimum gain, and is adapted to scale the subband reduced-echo microphone signal with the adjusted gain.

9. An arrangement as claimed in claim 8, wherein

$$\rho_i(t) = (1-\mu)\dot{}\rho_i(t-1) + \mu|Xi(t)|^2$$

where $\rho_i(t)$ is the estimate of the power spectrum at the $i^{th}$ subband $|Xi(t)|^2$ is the current instantaneous power estimate at the $i^{th}$ subband and $\mu<<1$.

10. The arrangement of any preceding claim further including a loudspeaker (506) and a microphone (524) respectively coupled to the speaker-line terminal and the microphone-in terminal.

11. . A telephone including an arrangement as claimed in any preceding claim.

12. A telephone as claimed in claim 11, being a cordless or hands free telephone.

13. A method of operating an apparatus including a loudspeaker coupled to an output signal source for generating a corresponding acoustic signal and a microphone for generating an input signal, the method comprising the steps of:

    reducing the presence of the output signal in the input signal by subband domain acoustic echo cancellation for generating a subband reduced-echo signal; **characterised in that** it further comprises the step of:

suppressing noise in the subband reduced echo signal by subband domain noise suppression for generating a subband reduced-noise reduced echo signal.

**14.** The method of claim 13 further comprising the step of generating a fullband signal from the subband reduced-echo reduced-noise signal in a syntheses filter.

**15.** The method of claim 13 or claim 14 wherein the apparatus further includes an adaptive filter for the subband acoustic echo cancellation and further comprising the steps of:

detecting near-end speech detected by the microphone by processing subband signals from the microphone and an output from the subband noise suppression along with the subband reduced-echo signal: and generating a control signal to inhibit changes in coefficients of the adaptive filter.

**16.** The method of claim 13, claim 14 or claim 15 further comprising a step of reducing any residual echo signal in the subband reduced-echo reduced-noise signal.

**17.** The method of any of claims 13 to 16 wherein the step of suppressing noise for each subband i comprises estimating a current power $r_i(t)$, updating a noise spectrum estimate $NS_i$, computing a noise suppression gain $G_i$, determining an adjusted gain by adjusting for a minimum gain, and scaling the subband reduced-echo microphone signal with the adjusted gain.

**18.** The method of any of claims 13 to 17 wherein the apparatus is provided as a cellular telephone.

## Patentansprüche

**1.** Aufbereitungsanordnung (200), mit:

einem Mikrophoneingang- und einem Lautsprecherleitung-Eingangsanschluss, die Mikrophonsignale (225) bzw. Lautsprechersignale (208) empfangen;

einer Echolöschungsschaltung (210), die zwischen den Mikrophoneingang-Eingangsanschluss und den Lautsprecherleitung-Eingangsanschluss geschaltet ist, um ein Unterband-Mikrophonsignal (226) mit reduziertem Echo zu erzeugen, indem sie i) das Mikrophonsignal (225) in ein Unterband-Mikrophonsignal transformiert und das Lautsprechersignal (208) in ein gefiltertes Unterband-Lautsprechersignal (214) transformiert und indem sie ii) eine Unterband-Subtraktion (220) des gefilterten Unterband-Lautsprechersignals von dem Unterband-Mikrophonsignal ausführt; **dadurch gekennzeichnet, dass** sie ferner umfasst:

eine Rauschunterdrückungsschaltung (230), die mit der Echolöschungsschaltung (210) gekoppelt ist, um ein Unterband-Mikrophonsignal (232) mit reduziertem Rauschen und reduziertem Echo zu erzeugen, indem sie eine Unterband-Rauschunterdrückung an dem Unterband-Mikrophonsignal (226) mit reduziertem Echo vornimmt.

**2.** Anordnung nach Anspruch 1, die ferner ein Synthetisierungsfilter (234) umfasst, das auf das Unterband-Signal (232) mit reduziertem Rauschen und reduziertem Echo anspricht, um ein Vollband-Signal mit reduziertem Rauschen und reduziertem Echo zu erzeugen.

**3.** Anordnung nach Anspruch 1 oder Anspruch 2, bei der die Echolöschungsschaltung (210) ein adaptives Filter (516) umfasst, das Filterkoeffizienten besitzt, die in Reaktion auf die Rückkopplung des Unterband-Mikrophonsignals mit reduziertem Echo veränderbar sind, um das Lautsprechersignal in ein gefiltertes Unterband-Lautsprechersignal zu transformieren.

**4.** Anordnung nach Anspruch 1 oder Anspruch 2, bei der die Echolöschungsschaltung ein adaptives Filter (716) umfasst, das so angeschlossen ist, dass es entsprechende Unterbandsignale von der Ausgangssignalquelle und das Mikrophon-Eingangssignal empfängt, um ein Signal zu erzeugen, das zu der Komponente des von dem Mikrophon erfassten ersten akustischen Signals von dem Lautsprecher proportional ist.

**5.** Anordnung nach einem vorhergehenden Anspruch, die ferner eine Detektorschaltung (538) umfasst, die auf das Unterband-Mikrophonsignal, das Unterband-Mikrophonsignal mit reduziertem Echo und das Mikrophonsignal mit reduziertem Rauschen und reduziertem Echo anspricht, um nur dann ein FREEZE-Steuersignal (542) zu erzeugen, wenn das Mikrophonsignal Nahsprache, d. h. Sprache, die wirklich in der Nähe des Mikrophons gesprochen wird, enthält;

wobei das adaptive Filter auf das FREEZE-Steuersignal anspricht, um eine Änderung der Filterungskoeffizienten zu sperren.

6. Anordnung nach Anspruch 5, bei der die Detektorschaltung umfasst:

eine Schaltung (538) zum Bestimmen eines Echopfad-Energieverhältnisses, EPR, als eines Energieverhältnisses zwischen dem Mikrophonsignal (525) und dem Lautsprechersignal (508) und eines Echolöschungs-Energieverhältnisses, ECER, als eines Energieverhältnisses zwischen einem Ausgang der Echolöschungsschaltung und dem Lautsprechersignal (508);

eine Schaltung, die das EPR mit einem ersten vorgegebenen Schwellenwertpegel und das ECER mit einem zweiten vorgegebenen Schwellenwertpegel vergleicht; und

eine Erfassungsschaltung, die bestimmt, dass Nahsprache vorhanden ist, wenn das EPR den ersten vorgegebenen Schwellenwertpegel übersteigt und wenn gleichzeitig das ECER den zweiten vorgegebenen Schwellenwertpegel übersteigt.

7. Anordnung nach den Ansprüchen 2 bis 6, die ferner eine Unterband-Restecho-Löschungsschaltung (750) umfasst, die das Synthetisierungsfilter mit der Rauschunterdrückungsschaltung koppelt und so beschaffen ist, dass sie das Unterband-Mikrophonsignal verwendet, um jegliches Restecho in dem Mikrophonsignal mit reduziertem Rauschen und reduziertem Echo zu reduzieren.

8. Anordnung nach einem vorhergehenden Anspruch, bei der die Rauschunterdrückungsschaltung in jedem Unterband i so beschaffen ist, dass sie eine momentane Leistung $r_i(t)$ schätzt, einen Rauschspektrum-Schätzwert $NS_i$ aktualisiert, einen Rauschunterdrückungs-Verstärkungsfaktor $G_i$ berechnet, einen eingestellten Verstärkungsfaktor durch Einstellen eines minimalen Verstärkungsfaktors bestimmt und das Unterband-Mikrophonsignal mit reduziertem Echo mit dem eingestellten Verstärkungsfaktor skaliert.

9. Anordnung nach Anspruch 8, bei der

$$\rho_i(t) = (1 - \mu)\rho_i(t - 1) + \mu\, |Xi(t)|^2$$

wobei $\rho_i(t)$ der Schätzwert des Leistungsspektrums in dem i-ten Unterband ist, $|Xi(t)|^2$ der aktuelle momentane Leistungsschätzwert in dem i-ten Unterband ist und $\mu << 1$ ist.

10. Anordnung nach einem vorhergehenden Anspruch, die ferner einen Lautsprecher (506) und ein Mikrophon (524) umfasst, die mit dem Lautsprecherleitungsanschluss bzw. mit dem Mikrophoneingangsanschluss gekoppelt sind.

11. Telephon, das eine Anordnung nach einem vorhergehenden Anspruch enthält.

12. Telephon nach Anspruch 11, das ein schnurloses Telephon oder eine Telephon-Freisprechanlage ist.

13. Verfahren zum Betreiben einer Vorrichtung, die einen Lautsprecher, der mit einer Ausgangssignalquelle gekoppelt ist, um ein entsprechendes akustisches Signal zu erzeugen, und ein Mikrophon, um ein Eingangssignal zu erzeugen, enthält, wobei das Verfahren die folgenden Schritte umfasst:

Reduzieren des Vorhandenseins des Ausgangssignals in dem Eingangssignal durch ein Auslöschen des Schallechos im Unterbandbereich, um ein Unterbandsignal mit reduziertem Echo zu erzeugen, **dadurch gekennzeichnet, dass** es ferner den folgenden Schritt umfasst:

Unterdrücken von Rauschen in dem Unterbandsignal mit reduziertem Echo durch eine Unterbandbereich-Rauschunterdrückung, um ein Unterbandsignal mit reduziertem Rauschen und reduziertem Echo zu erzeugen.

**14.** Verfahren nach Anspruch 13, das ferner den Schritt des Erzeugens eines Vollbandsignals aus dem Unterbandsignal mit reduziertem Echo und reduziertem Rauschen in einem Synthetisierungsfilter umfasst.

**15.** Verfahren nach Anspruch 13 oder Anspruch 14, bei dem die Vorrichtung ferner ein adaptives Filter für das Auslöschen des akustischen Echos im Unterband enthält und das ferner die folgenden Schritte umfasst:

Erfassen von Nahsprache, die durch das Mikrophon erfasst wird, indem Unterbandsignale von dem Mikrophon und ein Ausgang von der Unterband-Rauschunterdrückung zusammen mit dem Unterbandsignal mit reduziertem Echo verarbeitet werden; und

Erzeugen eines Steuersignals, um Änderungen der Koeffizienten des adaptiven Filters zu sperren.

**16.** Verfahren nach Anspruch 13, Anspruch 14 oder Anspruch 15, das ferner den Schritt des Reduzierens jeglichen Restechosignals in dem Unterbandsignal mit reduziertem Echo und reduziertem Rauschen umfasst.

**17.** Verfahren nach einem der Ansprüche 13 bis 16, bei dem der Schritt des Unterdrückens von Rauschen für jedes Unterband i das Schätzen einer aktuellen Leistung $r_i(t)$, das Aktualisieren eines Rauschspektrumschätzwerts $NS_i$, das Berechnen eines Rauschunterdrückungs-Verstärkungsfaktors $G_i$, das Bestimmen eines eingestellten Verstärkungsfaktors durch Einstellen eines minimalen Verstärkungsfaktors und das Skalieren eines Unterband-Mikrophonsignals mit reduziertem Echo anhand des eingestellten Verstärkungsfaktors umfasst.

**18.** Verfahren nach einem der Ansprüche 13 bis 17, bei dem die Vorrichtung als ein Zellentelephon vorgesehen ist.

**Revendications**

**1.** Dispositif de conditionnement (200) comprenant :

des bornes d'entrée de microphone et d'entrée de ligne de haut-parleur pour recevoir, respectivement, des signaux de microphone (225) et de haut-parleur (208) ;
un circuit de compensation d'écho (210) couplé entre les bornes d'entrée de microphone et d'entrée de ligne de haut-parleur, pour produire un signal de microphone à écho réduit de sous-bande (226) en (i) transformant le signal de microphone (225) en un signal de microphone de sous-bande et le signal de haut-parleur (208) en un signal de haut-parleur de sous-bande filtré (214), et (ii) par soustraction, de sous-bande, (220) du signal de haut-parleur de sous-bande filtré du signal de microphone de sous-bande ; et

**caractérisé en ce qu'**il comprend en outre :

un circuit de suppression de bruit (230) couplé au circuit de compensation d'écho (210) pour produire un signal de microphone à écho réduit et à bruit réduit de sous-bande (232) par suppression de bruit de sous-bande du signal de microphone à écho réduit de sous-bande (226).

**2.** Dispositif selon la revendication 1, comprenant en outre un filtre de synthèse (234) réactif au signal à écho réduit et à bruit réduit de sous-bande (232) pour générer un signal à écho réduit et à bruit réduit de pleine bande (236).

**3.** Dispositif selon la revendication 1 ou 2, dans lequel le circuit de compensation d'écho (210) comprend un filtre adaptable (516) ayant des coefficients de filtre variables réactifs à la réaction du signal de microphone à écho réduit de sous-bande pour transformer le signal de haut-parleur en un signal de haut-parleur de sous-bande filtré.

**4.** Dispositif selon la revendication 1 ou 2, dans lequel le circuit de compensation d'écho comprend un filtre adaptable (716) couplé pour recevoir des signaux de sous-bandes correspondants à partir de la source de signal de sortie et du signal d'entrée du microphone pour générer un signal proportionnel à la composante du premier signal acoustique provenant du haut-parleur détecté par le microphone.

**5.** Dispositif selon l'une quelconque des revendications précédentes, comprenant en outre un circuit de détection (538) réactif au signal de microphone de sous-bande, au signal de microphone à écho réduit de sous-bande et au signal de microphone à écho réduit et à bruit réduit pour générer un signal de commande FREEZE (GEL) (542) uniquement lorsque le signal de microphone contient du discours local, c'est-à-dire, du discours réellement émis à proximité du microphone ;

le filtre adaptable étant réactif au signal de commande FREEZE (GEL) pour empêcher les coefficients de filtre de changer.

6. Dispositif selon la revendication 5, dans lequel le circuit de détection comprend :

un circuit (538) pour déterminer un rapport d'énergie de trajectoire d'écho EPR en tant que rapport d'énergie entre le signal de microphone (525) et le signal de haut-parleur (508), et un rapport d'énergie de compensation d'écho ECER en tant que rapport d'énergie entre une sortie du circuit de compensation d'écho et le signal de haut-parleur (508) ;

un circuit comparant EPR à un premier niveau seuil prédéterminé et ECER à un deuxième niveau seuil prédéterminé ; et

un circuit de détection pour déterminer que le discours local est présent lorsque EPR dépasse le premier niveau seuil prédéterminé et en même temps ECER dépasse le deuxième niveau seuil prédéterminé.

7. Dispositif selon les revendications 2 à 6, comprenant en outre un circuit de compensation d'écho résiduel de sous-bande (750) couplant le filtre de synthèse au circuit de suppression de bruit, qui est adapté pour utiliser le signal de microphone de sous-bande pour réduire un quelconque écho résiduel dans le signal de microphone à écho réduit et à bruit réduit.

8. Dispositif selon l'une quelconque des revendications précédentes, dans lequel dans chaque sous-bande i le circuit de suppression de bruit est adapté pour estimer une puissance de courant $r_i(t)$, est adapté pour mettre à jour une estimation de spectre de bruit $NS_i$, est adapté pour calculer un gain de suppression de bruit $G_i$, est adapté pour déterminer un gain ajusté en ajustant un gain minimum, et est adapté pour mise à l'échelle le signal de microphone à écho réduit de sous-bande avec le gain ajusté.

9. Dispositif selon la revendication 8, dans lequel :

$$\rho_i(t) = (1 - \mu) \cdot \rho_i(t - 1) + \mu|Xi(t)|^2$$

où $\rho_i(t)$ est l'estimation du spectre de puissance à la $i^{ème}$ sous-bande, $|Xi(t)|^2$ est l'estimation de puissance instantanée de courant à la $i^{ème}$ sous-bande et $\mu \ll 1$.

10. Dispositif selon l'une quelconque des revendications précédentes, comprenant en outre un haut-parleur (506) et un microphone (524) respectivement couplés à la borne de ligne de haut-parleur et à la borne d'entrée de microphone.

11. Téléphone comprenant un dispositif selon l'une quelconque des revendications précédentes.

12. Téléphone selon la revendication 11 étant un téléphone sans fil ou mains libres.

13. Procédé de fonctionnement d'un appareil comprenant un haut-parleur couplé à une source de signal de sortie pour générer un signal acoustique correspondant et un microphone pour générer un signal d'entrée, le procédé comprenant les étapes consistant à :

réduire la présence du signal de sortie dans le signal d'entrée par l'annulation de l'écho acoustique de domaine de sous-bande pour générer un signal à écho réduit de sous-bande ; **caractérisé en ce qu'**il comprend en outre l'étape consistant à :

supprimer le bruit dans le signal à écho réduit de sous-bande par la suppression de bruit de domaine de sous-bande pour générer un signal à écho réduit à bruit réduit de sous-bande.

14. Procédé selon la revendication 13 comprenant en outre l'étape consistant à générer un signal de pleine bande à partir du signal à écho réduit et à bruit réduit de sous-bande dans un filtre de synthèse.

15. Procédé selon la revendication 13 ou 14, dans lequel l'appareil comprend en outre un filtre adaptable pour la compensation d'écho acoustique de sous-bande et comprenant en outre les étapes consistant à :

détecter un discours local détecté par le microphone en traitant les signaux de sous-bande provenant du microphone et une sortie provenant de la suppression de bruit de sous-bande avec le signal à écho réduit de sous-bande ; et

générer un signal de commande pour inhiber les changements de coefficients du filtre adaptable.

16. Procédé selon la revendication 13, 14 ou 15, comprenant en outre une étape consistant à réduire un quelconque signal d'écho résiduel dans le signal à écho réduit à bruit réduit de sous-bande.

17. Procédé selon l'une quelconque des revendications 13 à 16, dans lequel l'étape consistant à supprimer le bruit pour chaque sous-bande i comprend l'estimation d'une puissance de courant $r_i(t)$, la mise à jour d'une estimation de spectre de bruit $NS_i$, le calcul d'un gain de suppression de bruit $G_i$, la détermination d'un gain ajusté en ajustant un gain minimum et la mise à l'échelle du signal de microphone à écho réduit de sous-bande avec le gain ajusté.

18. Procédé selon l'une quelconque des revendications 13 à 17, dans lequel l'appareil est fourni comme un téléphone cellulaire.

# FIG. 1
## (PRIOR ART)

# FIG. 2

## FIG. 3

300

```
ESTIMATE THE
CURRENT POWER          — 302

UPDATE NOISE
FLOOR ESTIMATE         — 304

COMPUTE NOISE
SUPPRESSION GAIN       — 306

ADJUST FOR THE
MINIMUM GAIN           — 308

NOISE SUPPRESSION
-SCALE THE
CURRENT SIGNAL         — 310
WITH GAIN
```

## FIG. 4

400

402 — START i=0

$i = i+1$ — 404

406 — i > NUMBER OF SUB-BANDS? — YES → END — 408

NO

COMPUTE THE POWER OF THE SUB-BAND SIGNAL — 410

412 — $\rho_i > k*NS_i$ — YES → INCREASE $NS_i$ — 414

NO

416 — $\rho_i < k*NS_i$ — YES → DECREASE $NS_i$ — 418

NO

$NS_i = \rho_i$ — 420

$NS_i < MIN\_NS$ — YES → $NS_i = MIN\_NS$ — 424

422 — NO

COMPUTE GAIN $G_i$ — 426

$G_i < MIN\_GAIN$ — YES → $G_i = MIN\_GAIN$ — 430

428 — NO

$s_i(t) = G_i * e_i(t)$ — 432

## FIG. 5

502

AMPLIFIER

504

$u(t)$

506

508

ANALYSIS FILTER — 512

510

540 $x_i(t)$ 514

SUBBAND DOMAIN NEAR-END SPEECH DETECTION

538

542

ADAPTIVE FILTER — 516

528

518

520

522

ANALYSIS FILTER

$y(t)$

524

525

544 546

534

$z(t)$

SYNTHESIS FILTER

$s_i(t)$

NOISE SUPPRESSION

536 532

$e_i(t)$

526

530

548

## FIG. 7

702

AMPLIFIER

704

$u(t)$

706

708

ANALYSIS FILTER — 712

710

740 $x_i(t)$ 714

SUBBAND DOMAIN NEAR-END SPEECH DETECTION

738

742

ADAPTIVE FILTER — 716

728

718

722

ANALYSIS FILTER

$y(t)$

724

725

734

$z(t)$

SYNTHESIS FILTER

736

$r_i(t)$

752

RESIDUE ECHO SUPPRESSION

$s_i(t)$

NOISE SUPPRESSION

732

744 746

$e_i(t)$

726

720

750 730 748

754

**FIG. 6**

600

602 — COMPUTE LONG-TERM AVERAGE OF FAR-END SIGNAL ENERGY

604 — COMPUTE LONG-TERM AVERAGE OF NEAR-END SIGNAL ENERGY

606 — $EPR=\dfrac{NEAR\_ERG}{FAR\_ERG}$

608 — EPR $>\beta$LT_EPR ?

YES

612 — UPDATE LT_EPR  LT_EPR= $(1-\alpha)$LT_EPR+$\alpha$EPR

NO

610 — NEAR_END_SPEECH_1 =YES

614 — NEAR_END_SPEECH_1 =NO

616 — COMPUTE ECHO CANCEL OUTPUT ENERGY

618 — $ECER=\dfrac{OUT\_ERG}{FAR\_ERG}$

620 — ECER>$\alpha$ ?

622 — NEAR_END_SPEECH_2 =YES

624 — NEAR_END_SPEECH_2 =NO

626 — NEAR_END_SPEECH_1 =YES AND NEAR_END_SPEECH_2 =YES ?

YES  NO

628 — NEAR_END_SPEECH DETECT

630 — NO NEAR_END

END — 632

*800*

ESTIMATE CURRENT POWER —802

COMPUTE ECHO CANCELLER ENERGY RATIO (ECER) —804

*FIG. 8*

YES ← ECER< $\gamma$ ? 806

NO

SPECTRUM RESHAPING ← NOISE SPECTRUM ESTIMATE

808

START —902

*900*

i=0 —904

i=i+1 —906

*FIG. 9*

YES ← i > number of sub-band ? 908

STOP —910

NO

910— STOP

$\xi_i = \lambda(t) \psi_i(t)$ —912

$r_i(t)=s_i(t) \cdot NS_i \cdot \xi_i$ —914

FIG. 10

*FIG. 11A*

*FIG. 11B*

*FIG. 11C*

*FIG. 11D*